# EUROPEAN PATENT APPLICATION

(11) **EP 4 741 993 A1**
(43) Date of publication of application: **13.05.2026**
(21) Application number: 25213016.6
(22) Date of filing: 03.11.2025
(51) Int. Cl.: G06F 1/16, G06F 3/0362, G06F 3/0485, G04G 21/08

(54) **GAIN FACTOR FOR A ROTATIONAL INPUT OF A ROTARY CROWN OF A WEARABLE COMPUTING DEVICE BASED ON ANGULAR VELOCITY**

(30) Priority: 06.11.2024 US 202418938958
(71) Applicant: GOOGLE LLC, Mountain View CA 94043 (US)
(72) Inventor: Wu, Tong, Mountain View, 94043 (US); Lee, Justin Woo Young, Mountain View, 94043 (US)
(74) Representative: Maikowski & Ninnemann Patentanwälte Partnerschaft mbB

(57) **Abstract**

A wearable computing device has an outer covering, a housing, an electronic display screen arranged within the housing and viewable through the outer covering, a rotary crown positioned on a side of the electronic display screen, and at least one controller communicatively coupled to the rotary crown. The rotary crown is configured to receive a rotational input. The controller(s) is configured to apply a gain factor to the rotational input to generate a digital output for the electronic display screen. The gain factor is proportional to an angular velocity of the rotational input.

## Description

### FIELD

The present disclosure relates generally to wearable computing devices, and more particularly, to a rotary crown of a wearable computing device having a non-linear mapping of a rotational input thereof to generate a digital output for the electronic display screen that is proportional to an angular velocity of the rotational input.

### BACKGROUND

Recent advances in technology, including those available through consumer wearable devices, have provided corresponding advances in personal health detection and monitoring. For example, devices such as fitness trackers and smartwatches are able to determine information relating to the pulse or motion of a person wearing the device. Such devices typically include a display, battery, sensors, wireless communications capability, power source, and various interface buttons.

Moreover, many wearable devices have a rotary crown as an input device that provides a natural and precise way for the user to interact with the on-screen content without occluding the screen. Common use cases are slider control and page scrolling. However, in typical linear mappings, where x degrees of crown rotation is equal to y values incremented on a slider (e.g., 1 degree rotated = 0.1 increase in slider control), there is a tradeoff between speed and precision. In particular, if the ratio of x/y is small to achieve faster speed of slider changes, then it is impossible to achieve precision where the user only wants to move the slider by a very fine amount. Further, if the ratio of x/y is large enough to optimize for precision, then it is cumbersome to increase a slider by large values e.g., from 0 to 100 quickly.

Accordingly, the present disclosure is directed to a wearable computing device, or any other suitable device having velocity-driven crown interactions to address the aforementioned issues by providing a non-linear mapping of rotation of the rotary crown to a value change as well as intuitive gestures to overcome the speed and precision tradeoff described herein.

### SUMMARY

Aspects and advantages of embodiments of the present disclosure will be set forth in part in the following description, or can be learned from the description, or can be learned through practice of the embodiments.

In an aspect, the present disclosure is directed to a wearable computing device. The wearable computing device includes an outer covering, a housing, an electronic display screen arranged within the housing and viewable through the outer covering, a rotary crown positioned on a side of the electronic display screen, and at least one controller communicatively coupled to the rotary crown. The rotary crown is configured to receive a rotational input. The controller(s) is configured to apply a gain factor to the rotational input to generate a digital output for the electronic display screen. The gain factor is proportional to an angular velocity of the rotational input.

In another aspect, the present disclosure is directed to a method for providing a non-linear mapping of a rotational input of a rotary crown and a digital output of a wearable computing device to improve a scrolling experience of the wearable computing device. The method includes receiving, via a controller of the wearable computing device, a rotational input of the rotary crown, the rotary crown positioned on a side of an electronic display screen of the wearable computing device. The method also includes applying, via the controller, a gain factor to the rotational input to determine a modified rotational input, the gain factor being proportional to an angular velocity of the rotational input. Further, the method includes generating the digital output for the electronic display screen based on the modified rotational input.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
FIG. 1A illustrates a front perspective view of a wearable computing device on a wrist of a user in accordance with aspects of the present subject matter;
FIG. 1B illustrates a side view of the wearable computing device of FIGS. 1A and 1B in accordance with aspects of the present subject matter;
FIG. 2 illustrates a schematic diagram of an example system that can be utilized with the wearable computing device of FIGS. 1A-1B in accordance with aspects of the present subject matter;
FIG. 3 illustrates a schematic diagram of an environment in which aspects of various embodiments can be implemented according to the present disclosure;
FIG. 4 illustrates a side view of an embodiment of a rotary crown module of a wearable computing device according to the present disclosure;
FIGS. 5A-5C illustrate various views of an electronic display screen of a wearable computing device, particularly illustrating the electronic display screen as contents viewable on the electronic display screen are being scrolled through according to the present disclosure;
FIGS. 6A-6C illustrate various schematic diagrams of a rotary crown of a wearable computing device according to the present disclosure, particularly illustrating an amount of physical rotation of the rotary crown needed to increment a variable by a constant amount;
FIGS. 7A-7C illustrate various graphs illustrating velocity-based gain of a rotary crown 128 according to the present disclosure, particularly illustrating sublinear, linear, and super-linear plots, respectively;
FIG. 8 illustrates an embodiment of a graph of rotary crown velocity (degrees per second) versus time according to the present disclosure; and
FIG. 9 illustrates a flow diagram of an embodiment of a method for providing a non-linear mapping of a rotational input of a rotary crown and a digital output of a wearable computing device to improve a scrolling experience of the wearable computing device according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the appended independent claims. For instance, features illustrated or described as part of one embodiment can be used with another embodiment to yield a still further embodiment. Thus, it is intended that the present invention covers such modifications and variations as come within the scope of the appended claims and their equivalents.

### Overview

The present disclosure is directed to a wearable computing device having a rotary crown as an input device that provides a natural and precise way for the user to interact with the on-screen content without occluding the screen. For conventional devices that utilize linear mappings between crown rotation values incremented on a slider, there is a tradeoff between speed and precision. In particular, if the mapping is small to achieve faster speed of slider changes, then it is impossible to achieve precision where the user only wants to move the slider by a very fine amount. However, if the mapping is large enough to optimize for precision, then it is cumbersome to increase a slider by large values e.g., from 0 to 100 quickly. Thus, the wearable computing device of the present disclosure utilizes velocity-driven crown interactions to address the aforementioned issues by providing a non-linear mapping of rotation of the rotary crown to a value change as well as intuitive gestures to overcome the speed and precision tradeoff described herein.

In particular, for accelerated scrolling, the digital output (e.g., the slider value change or pixels scrolled) on the screen is a response to the number of degrees rotated by the crown multiplied by a gain factor that is proportional to the crown angular velocity. This technique ensures that the user of the wearable computing device does not have to choose between speed and precision. In further examples, for use cases where the user wants to quickly snap to the next segment in a series with the crown (e.g., the next section of a YouTube^{®} video, the next chapter of an audio book, etc.), the user can implement a flick gesture to the crown to proceed directly to the next section.

With reference now to the Figures, example embodiments of the present disclosure will be discussed in further detail.

### Example Devices and Systems

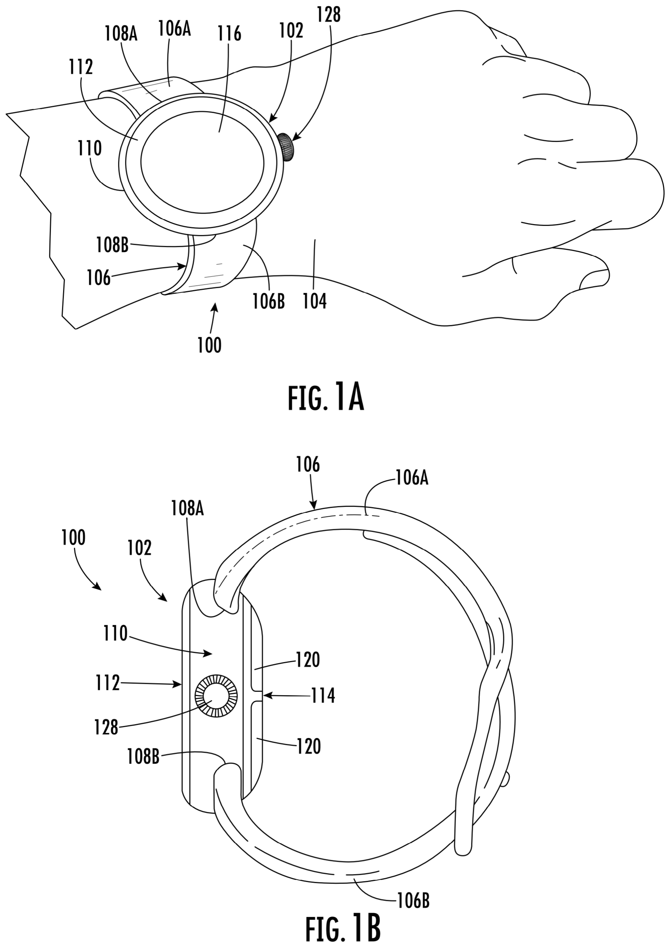

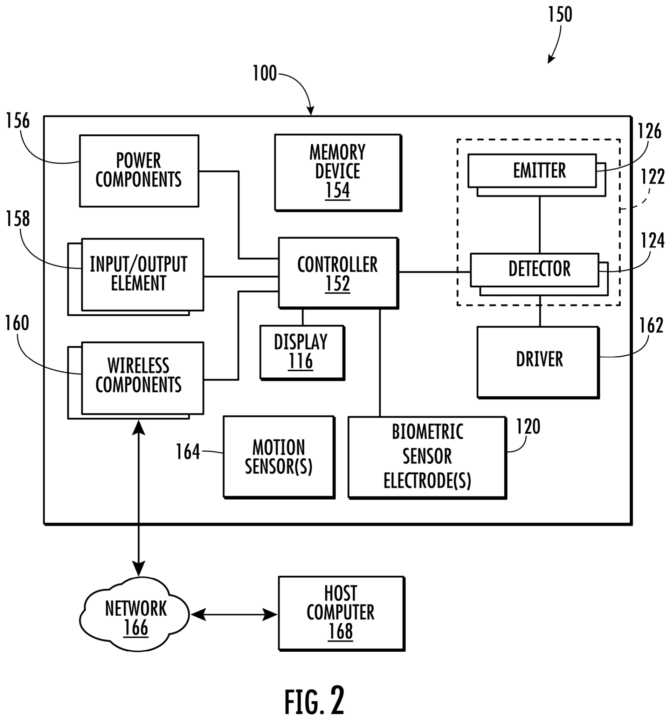

Referring now to the drawings, FIGS. 1A-1B illustrate perspective views of a wearable computing device 100 according to the present disclosure and FIG. 2 illustrates an example system 150 that can be utilized with such wearable computing device 100. In general, the wearable computing device 100 includes a housing 102 that contains the electronics associated with the wearable computing device 100. The housing 102 is configured to rest against a user. In some instances, as shown in FIG. 1A, the wearable computing device 100 may be worn on a user's forearm 104 like a wristwatch. Thus, as shown, the wearable computing device 100 may include a wearable band, such as a wristband 106 having one or more parts, such as the two wristband straps 106A, 106B, for securing the wearable computing device 100 to the user's forearm 104. In such instances, the housing 102 may include one or more connection points (e.g., connection points 108A, 108B) for such wristband 106. However, it should be appreciated that the wearable computing device 100 may be worn at any other suitable location by a user, such as, for example, on an ankle.

In addition, as shown in FIGS. 1A-1B, the housing 102 has a main housing 110, an upper housing cover 112, and a lower housing cover 114 (FIG. 1B). As particularly shown in FIG. 1B, the main housing 110 of the housing 102 of the wearable computing device 100 generally extends between the upper housing cover 112 and the lower housing cover 114 of the housing 102. As will be described in greater detail below, the upper and lower housing covers 112, 114 are connectable to the main housing 110 to seal an interior volume of the wearable computing device 100. In some instances, the connection points 108A, 108B may be provided on the main housing 110.

The upper housing cover 112 is configured to receive an electronic display screen 116. For example, in an embodiment, the upper housing cover 112 may be constructed of glass, polycarbonate, acrylic, or similar. The electronic display screen 116 may be arranged within the housing 102 and viewable through the upper housing cover 112. Moreover, in an embodiment, the electronic display screen 116 may cover an electronics package (not shown), which may also be housed within the housing 102.

The lower housing cover 114 of the housing 102 may be configured to be closest to a user when worn. For instance, the lower housing cover 114 may contact a dorsal wrist of a user when being worn by the user. As such, one or more sensor electrodes 120 may be positioned on the lower housing cover 114 so as to maintain skin contact with the user when being worn by the user. Thus, in such embodiments, each of the sensor electrodes 120 may be configurable to measure, at least, electrical impedance of the user at a location of the skin contact (e.g., at the dorsal wrist). Accordingly, in one or more embodiments, one or more (or all) of the plurality of sensor electrodes 120 may be impedance sensor electrodes.

Further, the sensor electrodes 120 described herein may be constructed of any suitable material. For example, in an embodiment, the sensor electrodes 120 described herein may be constructed of stainless steel, graphene, or any other material having a suitable conductivity and/or corrosion resistance and may have an optional PVD coating, which may be 1-micrometer thick titanium nitride. In such embodiments, the PVD coating may provide a desired color to the sensor electrodes 120, thereby preventing oxidation beyond what the stainless steel already provides, and also increases durability. In additional embodiments, PVD and surface finish can be used to increase/decrease moisture retention, which affects the impedance signal and user comfort. In particular embodiments, the sensor electrodes 120 may be formed of an alloy of tin and nickel (TiN) with a shiny or mirror surface finish. Moreover, in an embodiment, the sensor electrodes 120 may be constructed of a hydrophobic material or a transparent material. For instance, the sensor electrodes 120 may be constructed of glass, sapphire, ceramic, and/or the like with coatings (e.g., for hydrophobicity, wear resistance, and/or the like).

In some embodiments, the wearable computing device 100 may also include at least one additional biometric sensor electrode in addition to the impedance sensor electrodes 120. In such embodiments, the additional biometric sensor electrode may include one or more temperature sensors (such as an ambient temperature sensor or a skin temperature sensor), a humidity sensor, a pressure sensor, a microphone, an optical sensor (e.g., such as a photoplethysmography (PPG) sensor), and/or the like. For instance, in the schematic diagram of the system 150 shown in FIG. 2, the wearable computing device 100 includes an optical sensor 122 including one or more detectors 124 for detecting light and one or more light sources or emitters 126 (e.g., light-emitting diodes (LEDs)) for emitting light. The detectors 124 and emitters 126 may be arranged within the housing 102 and at least partially exposed through the lower housing cover 114 of the housing 102. The detectors 124 may be used alone and be used to detect ambient light (light not emitted from the wearable computing device 100) or may be used in combination with the emitters 126 such that the detectors 124 detect both ambient light and light from the emitters 126. Use of emitters 126 may particularly be useful in dark environments, where there is little ambient light. The data generated by the sensor(s) 122 may be used to determine a HR estimate or other physiological metrics and/or may to determine a distance of the lower housing cover 114 of the wearable computing device 100 from an object, such as the user's forearm 104 (FIG. 1A).

Moreover, in an embodiment, the emitters 126 and detectors 124 may also be capable of being used, in one example, for obtaining optical photoplethysmogram (PPG) measurements. Some PPG technologies rely on detecting light at a single spatial location, or adding signals taken from two or more spatial locations. Both of these approaches result in a single spatial measurement from which the HR estimate (or other physiological metrics) can be determined. In some embodiments, a PPG device employs a single light source coupled to a single detector (i.e., a single light path). Alternatively, a PPG device may employ multiple light sources coupled to a single detector or multiple detectors (i.e., two or more light paths). In other embodiments, a PPG device employs multiple detectors coupled to a single light source or multiple light sources (i.e., two or more light paths). In some cases, the light source(s) may be configured to emit green, red, and/or infrared (IR) light, as well as any other suitable wavelengths in the spectrum (such as long IR for metabolic monitoring). For example, a PPG device may employ a single light source and two or more light detectors each configured to detect a specific wavelength or wavelength range. In some cases, each detector 124 is configured to detect a different wavelength or wavelength range from one another. In other cases, two or more detectors 124 are configured to detect the same wavelength or wavelength range. In yet another case, one or more detectors 124 configured to detect a specific wavelength or wavelength range different from one or more other detectors 124). In embodiments employing multiple light paths, the PPG sensor may determine an average of the signals resulting from the multiple light paths before determining an HR estimate or other physiological metrics.

As further shown in FIG. 2, the system 150 may also include at least one controller 152. In an embodiment, the controller(s) 152 may be a central processing unit (CPU) or graphics processing unit (GPU) for executing instructions that can be stored in a memory device 154, such as flash memory or DRAM, among other such options. For example, in an embodiment, the memory device 154 may include RAM, ROM, FLASH memory, or other non-transitory digital data storage, and may include a control program comprising sequences of instructions which, when loaded from the memory device 154 and executed using the controller(s) 152, cause the controller(s) 152 to perform the functions that are described herein. As would be apparent to one of ordinary skill in the art, the system 150 can include many types of memory, data storage, or computer-readable media, such as data storage for program instructions for execution by the controller or any suitable processor. The same or separate storage can be used for images or data, a removable memory can be available for sharing information with other devices, and any number of communication approaches can be available for sharing with other devices.

The system 150 also includes one or more power components 156, such as may include a battery operable to be recharged through conventional plug-in approaches, or through other approaches such as capacitive charging through proximity with a power mat or other such device.

In addition, as shown, the system 150 includes any suitable user interface elements in communication with the controller 152, such as the display 116 of the wearable computing device 100. The display 116 may be any suitable display type, such as a touch screen, organic light emitting diode (OLED), liquid crystal display (LCD), and/or the like. In further embodiments, the system 150 can also include at least one additional I/O element 158 configured to allow the controller 152 to receive conventional inputs from a user. These conventional inputs can include, for example, a rotary crown 128 (FIGS. 1A and 1B), touch pad, touch screen, wheel, joystick, keyboard, mouse, keypad, and/or any other such device or element whereby a user can input a command to the system 150. In another embodiment, the I/O device(s) 158 may be connected by a wireless infrared or Bluetooth or other link as well in some embodiments. In some embodiments, the I/O device(s) 158 may additionally, or alternatively, include a microphone or other audio capture element that accepts voice or other audio commands. For example, in particular embodiments, the system 150 may not include any buttons, but might be controlled only through a combination of visual and audio commands, such that a user can control the wearable computing device 100 without having to be in contact therewith. In certain embodiments, the I/O elements 158 may also include one or more of the sensor electrodes 120 described herein, optical sensor(s) (e.g., sensor(s) 122), barometric sensors (e.g., altimeter, etc.), and the like.

The system 150 may also include one or more wireless components 160 operable to allow the controller 152 to communicate with one or more electronic devices within a communication range of the particular wireless channel. The wireless channel can be any appropriate channel used to enable devices to communicate wirelessly, such as Bluetooth, cellular, NFC, Ultra-Wideband (UWB), or Wi-Fi channels. It should be understood that the system 150 can have one or more conventional wired communications connections as known in the art.

Still referring to FIG. 2, the sensor(s) 122, may be coupled to the controller 152 directly or indirectly using driver circuitry 162 by which the controller 152 may drive the emitter(s) 126 and obtain signals from the detector(s) 124.

Moreover, the system 150 may include one or more internal motion sensors 164 (e.g., accelerometers, gyroscopes, and/or the like) inside the housing 102 and configured to generate motion data indicative of movement of the wearable computing device 100, with the motion sensors 164 being in communication with the controller 152.

A host computer 168 can communicate with the wireless networking components 160 via one or more networks 166, which may include one or more local area networks, wide area networks, UWB, and/or internetworks using any of terrestrial or satellite links. In some embodiments, the host computer 168 executes control programs and/or application programs that are configured to perform some of the functions described herein.

In some embodiments, the system 150 may include at least one imaging element, such as one or more cameras that are able to capture images of the surrounding environment and that are able to image a user, people, or objects in the vicinity of the device. The imaging element can include any appropriate technology, such as a CCD image capture element having a sufficient resolution, focal range, and viewable area to capture an image of the user when the user is operating the device. Further image capture elements may also include depth sensors. Methods for capturing images using a camera element with a computing device are well known in the art and will not be discussed herein in detail. It should be understood that image capture can be performed using a single image, multiple images, periodic imaging, continuous image capturing, image streaming, etc. Further, the system 150 can include the ability to start and/or stop image capture, such as when receiving a command from a user, application, or other device.

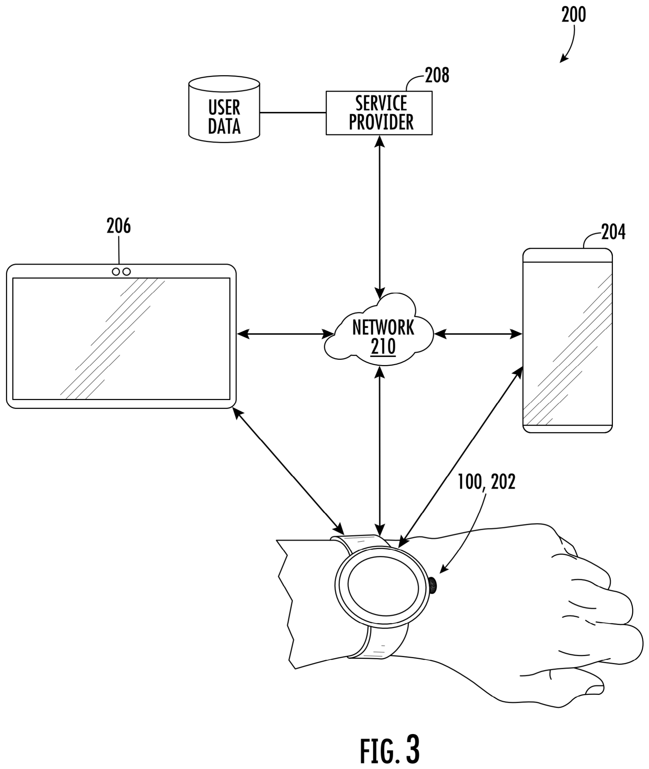

In general, the user might have a wearable computing device, such as a smartwatch or fitness tracker (e.g., the wearable computing device 100), which the user would like to be able to communicate with other devices, such as a smartphone, a tablet computer, and/or the like. Applications may allow communication between multiple devices and a wearable computing device to enable a user to obtain information from the wearable computing device. For example, as shown in FIG. 3, a schematic diagram of an environment 200 in which aspects of various embodiments can be implemented is illustrated. In particular, as shown, the user might have a smartwatch 202 or fitness tracker (such as wearable computing device 100), which the user would like to be able to communicate with a smartphone 204 and/or a tablet computer 206. The ability to communicate with multiple devices can enable a user to obtain information from the smartwatch 202, e.g., data captured using a sensor on the smartwatch 202, using an application installed on either the smartphone 204 and/or the tablet computer 206. The user may also want the smartwatch 202 to be able to communicate with a service provider 208, or other such entity, that is able to obtain and process data from the smartwatch and provide functionality that may not otherwise be available on the smartwatch or the applications installed on the individual devices. In addition, as shown, the smartwatch 202 may be able to communicate with the service provider 208 through at least one network 210, such as the Internet or a cellular network, or may communicate over a wireless connection such as Bluetooth^{®} to one of the individual devices, which can then communicate over the at least one network. There may be a number of other types of, or reasons for, communications in various embodiments.

In addition to being able to communicate, a user may also want the devices to be able to communicate in a number of ways or with certain aspects. For example, the user may want communications between the devices to be secure, particularly where the data may include personal health data or other such communications. The device or application providers may also be required to secure this information in at least some situations. The user may want the devices to be able to communicate with each other concurrently, rather than sequentially. This may be particularly true where pairing may be required, as the user may prefer that each device be paired at most once, such that no manual pairing is required. The user may also desire the communications to be as standards-based as possible, not only so that little manual intervention is required on the part of the user but also so that the devices can communicate with as many other types of devices as possible, which is often not the case for various proprietary formats. A user may thus desire to be able to walk in a room with one device and have such device automatically communicate with another target device with little to no effort on the part of the user.

In various conventional approaches, a device will utilize a communication technology such as Wi-Fi to communicate with other devices using wireless local area networking (WLAN). Smaller or lower capacity devices, such as many Internet of Things (IoT) devices, instead utilize a communication technology such as Bluetooth^{®}, and in particular Bluetooth Low Energy (BLE) which has very low power consumption.

In further embodiments, the environment 200 illustrated in FIG. 3 enables data to be captured, processed, and displayed in a number of different ways. For example, data may be captured using sensors on the smartwatch 202, but due to limited resources on the smartwatch 202, the data may be transferred to the smartphone 204 and/or the service provider 208 (or a cloud resource) for processing, and results of that processing may then be presented back to that user on the smartwatch 202, smartphone 204, and/or another such device associated with that user, such as the tablet computer 206. In at least some embodiments, a user may also be able to provide input such as health data using an interface on any of these devices, which can then be considered when making that determination.

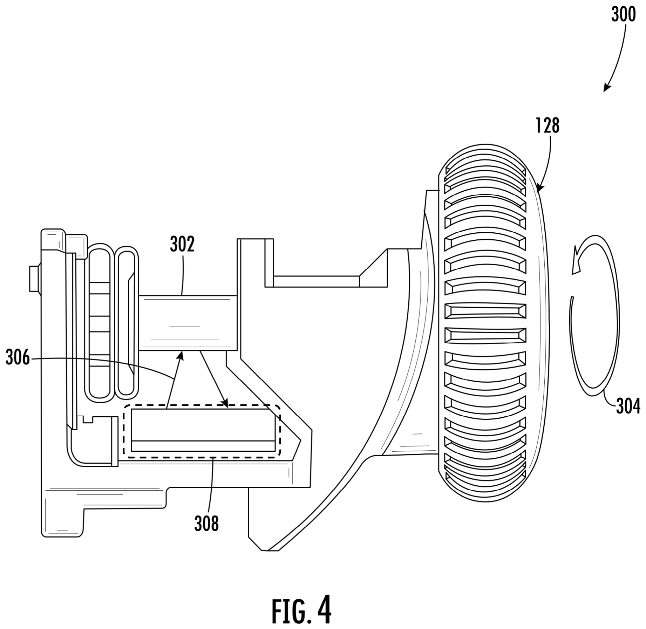

Referring now to FIG. 4, a side view of an embodiment of a rotary crown module 300 of a wearable computing device, such as the wearable computing device 100, according to the present disclosure is illustrated. Further, as shown, the rotary crown module 300 includes the rotary crown 128 described herein. Accordingly, the rotary crown module 300 is disposed in an aperture or hole in the housing 102. Thus, when installed, as shown in FIGS. 1A and 1B, a portion of the rotary crown module 300 is located outside of the housing 102 and a portion of the rotary crown module 300 is disposed within the housing 102. Further, the rotary crown module 300 may be configured to mechanically and/or electrically cooperate with the various components of the system 150 (FIG. 2). Moreover, as shown, the rotary crown module 300 includes a shaft 302 operably coupled to the rotary crown 128. Accordingly, rotation of the rotary crown 128 (as indicated by arrow 304) rotates the shaft 302, which can be monitored via one or more sensors 308. Such sensor(s) 308 can thus be used for detecting an angular velocity of a rotational input of the rotary crown 128.

For example, as shown, optical motion tracking (as indicated by arrows 306) of the shaft 302 can be accomplished via laser speckle imaging using the sensor(s) 308. Furthermore, in an embodiment, the rotary crown module 300, and more particularly, the sensor(s) 308, may be communicatively coupled to a controller (such as controller 152 of FIG. 2).

Accordingly, the rotary crown 128 as an input device on the wearable computing device 100 provides a natural and precise way for the user to interact with the on-screen content without occluding the electronic display screen 116. Common use cases may include slider control and/or page scrolling. However, in typical linear mappings, where x degrees of crown rotation is equal to y values incremented on a slider (e.g., 1 degree rotated is equal to a 0.1 increase in slider control) has an issue of tradeoff between speed and precision. For example, if the ratio of x/y is small to achieve faster speed of slider changes, then it is impossible to achieve precision where the user only wants to move the slider by very fine amount. Further, if the ratio of x/y is large to optimize for precision, then it is cumbersome to increase a slider by large values e.g., from 0 to 100 quickly.

Thus, the present disclosure provides velocity-driven crown interactions to overcome such issues by providing a non-linear mapping of rotation to value change as well as intuitive gestures to overcome the speed and precision tradeoff. More specifically, in an embodiment, as described herein, the rotary crown 128 is positioned on a side of the electronic display screen 116 and is configured to receive a rotational input, e.g., from a user of a wearable computing device 100. In an embodiment, for example, the rotational input includes a number of angular degrees moved by the rotary crown 128 at a certain angular velocity.

As such, in an embodiment, the controller 152 is configured to apply a gain factor to the rotational input to generate a digital output for the electronic display screen 116. In such embodiments, the gain factor is proportional to an angular velocity of the rotational input. Furthermore, in an embodiment, applying the gain factor to the rotational input may include multiplying the gain factor to the rotational input. Thus, the gain factor causes a relationship between the rotational input and the digital output for the electronic display screen 116 to be non-linear.

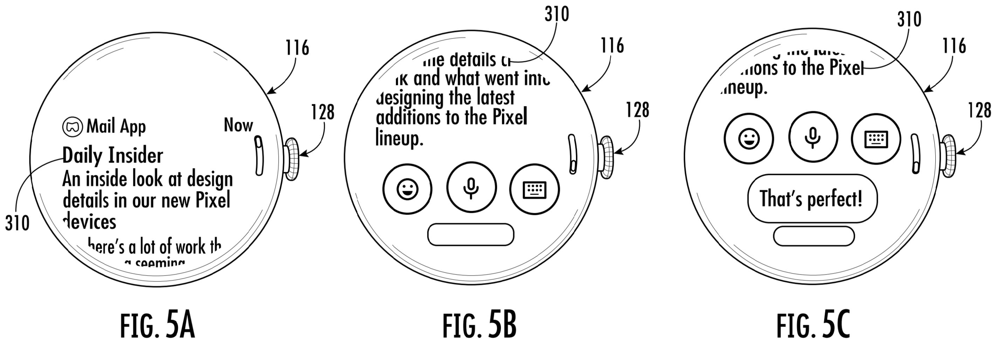

For example, in an embodiment, as shown in FIGS. 5A-5C, various views of the electronic display screen 116 are illustrated, particularly illustrating the electronic display screen 116 as contents 310 viewable on the electronic display screen 116 are being scrolled through according to the present disclosure. Thus, increasing the angular velocity of the rotational input (e.g., the user spinning the rotary crown 128 faster) accelerates the amount of scroll of the contents 310 on the electronic display screen 116 in one-dimensional rotation. In contrast, in an embodiment, decreasing the angular velocity of the rotational input (e.g., the user spinning the rotary crown 128 slower) allows for a more fine-tuned scroll of the contents 310 on the electronic display screen 116 in one-dimensional rotation.

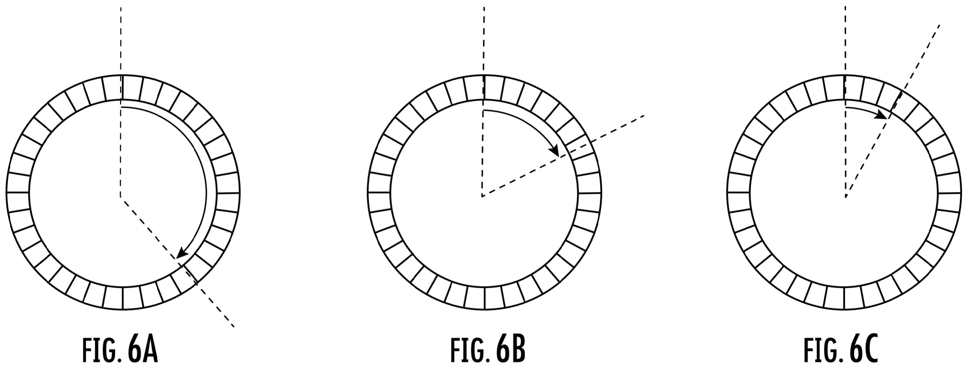

Moreover, as shown in FIGS. 6A-6C, various schematic diagrams of the rotary crown 128 of the wearable computing device 100 of the present disclosure are illustrated. In particular, as shown, the amount of physical rotation of the rotary crown 128 needed to increment a variable (e.g., pixels or seconds) by a constant amount changes with speed. Thus, as shown, for slower velocities (FIG. 6A), more rotation of the rotary crown 128 is needed at a lower angular velocity, whereas, for faster velocities, less rotation of the rotary crown 128 is needed at a higher angular velocity. Further, as shown in FIG. 6B, an intermediate amount of rotation of the rotary crown 128 is needed at an intermediate angular velocity.

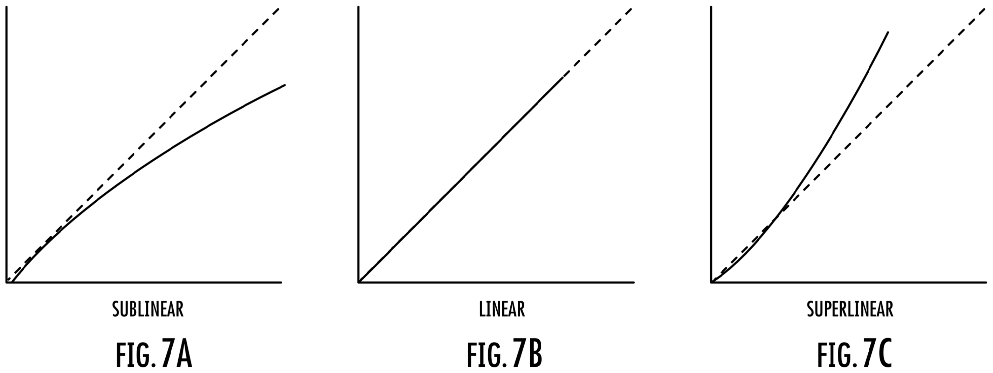

Furthermore, as shown in FIGS. 7A-7C, various graphs illustrating velocity-based gain of the rotary crown 128 according to the present disclosure are provided. More specifically, as shown, the graphs of FIGS. 7A-7C illustrate sublinear, linear, and superlinear plots, respectively. Thus, the graphs are provided to illustrate how below a certain velocity the gain factor is less than 1.0 (i.e., the scroll degree to screen-movement mapping is sublinear (FIG. 7A)), and above a certain velocity, it is superlinear (FIG. 7C).

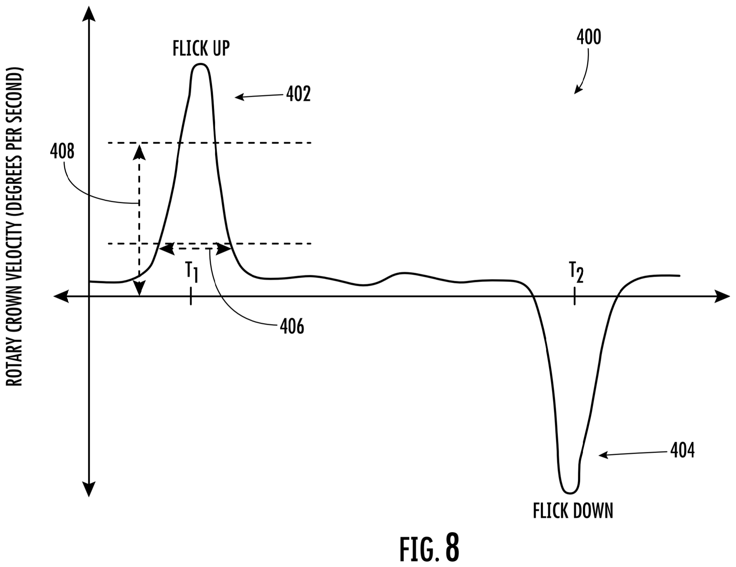

In additional embodiments, the rotational input of the rotary crown 128 may also include a flick. As used herein, a "flick" is generally characterized by a velocity peak duration and a velocity peak height occurring at the same time. For example, as shown in FIG. 8, a graph 400 of rotary crown velocity (degrees per second) versus time is illustrated according to the present disclosure. Further, as shown, the graph 400 illustrates a first flick 402 in an upward direction and a second flick 404 in a downward direction. As used herein, the upward direction and the downward direction of the flick (also described as an upward movement and/or a downward movement) refers to the directional movement of the rotary crown 128 with respect to the electronic display screen 116. Said differently, the upward direction/movement may correspond to a clockwise rotation of the rotary crown 128, whereas the downward direction/movement may correspond to a counterclockwise rotation of the rotary crown 128. Moreover, as shown, each of the first and second flicks 402, 404 are characterized by a velocity peak duration 406 and a velocity peak height 408 occurring at the same time (e.g., time T₁ and T₂, respectively). In such embodiments, when a user provides a flick as the rotational input for the rotary crown 128, the digital output on the electronic display screen 116 corresponds to discrete incremental movements.

### Example Methods

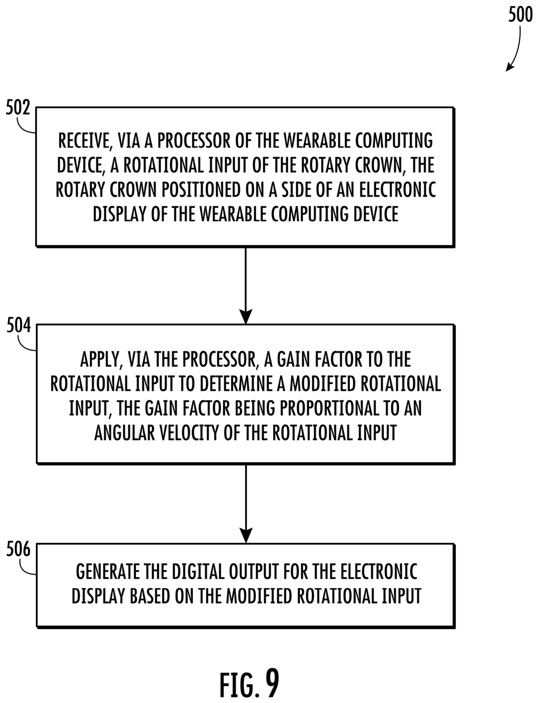

FIG. 9 illustrates a flow diagram of an embodiment of a method 500 for providing a non-linear mapping of a rotational input of a rotary crown and a digital output of a wearable computing device to improve a scrolling experience of the wearable computing device according to one or more example embodiments of the present disclosure. The method 500 can be implemented using, for instance, the wearable computing device 100 described above with reference to the example embodiments depicted in FIGS. 1-8.

The example embodiment illustrated in FIG. 9 depicts operations performed in a particular order for purposes of illustration and discussion. Those of ordinary skill in the art, using the disclosures provided herein, will understand that various operations or steps of the computer-implemented method 500 or any of the other methods disclosed herein can be adapted, modified, rearranged, performed simultaneously, include operations not illustrated, and/or modified in various ways without deviating from the scope of the present disclosure.

As shown at (502), the method 500 may include receiving, via a controller of the wearable computing device, a rotational input of the rotary crown, the rotary crown positioned on a side of an electronic display of the wearable computing device. As shown at (504), the method 500 may include applying, via the controller, a gain factor to the rotational input to determine a modified rotational input, the gain factor being proportional to an angular velocity of the rotational input. As shown at (506), the method 500 may include generating the digital output for the electronic display based on the modified rotational input.

### Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present disclosure has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

## Claims

1. A wearable computing device, comprising:
an outer covering;
a housing;
an electronic display screen arranged within the housing and viewable through the outer covering;
a rotary crown positioned on a side of the electronic display screen, the rotary crown configured to receive a rotational input; and
at least one controller communicatively coupled to the rotary crown,
wherein the at least one controller is configured to apply a gain factor to the rotational input to generate a digital output for the electronic display screen, the gain factor being proportional to an angular velocity of the rotational input.

2. The wearable computing device of claim 1, wherein the gain factor causes a relationship between the rotational input and the digital output to be non-linear.

3. The wearable computing device of claim 1 or 2, wherein the rotational input comprises a number of angular degrees moved by the rotary crown at a certain angular velocity.

4. The wearable computing device of any one of claims 1 to 3, wherein increasing the angular velocity of the rotational input is configured to accelerate an amount of scroll on the electronic display screen in one-dimensional rotation.

5. The wearable computing device of any one of the preceding claims, wherein decreasing the angular velocity of the rotational input allows for a more fine-tuned scroll on the electronic display screen in one-dimensional rotation.

6. The wearable computing device of any one of the preceding claims, wherein, when the rotational input of the rotary crown comprises a flick, the digital output corresponds to discrete incremental movements on the electronic display screen.

7. The wearable computing device of claim 6, wherein the flick is **characterized by** a velocity peak duration and a velocity peak height occurring at the same time.

8. The wearable computing device of claim 6 or 7, wherein the flick is an upward movement or a downward movement with respect to the electronic display screen.

9. The wearable computing device of any one of the preceding claims, wherein applying the gain factor to the rotational input further comprises multiplying the gain factor to the rotational input.

10. The wearable computing device of any one of the preceding claims, further comprising at least one sensor for detecting the angular velocity of the rotational input.

11. A method for providing a non-linear mapping of a rotational input of a rotary crown and a digital output of a wearable computing device to improve a scrolling experience of the wearable computing device, the method comprising:
receiving, via a controller of the wearable computing device, a rotational input of the rotary crown, the rotary crown positioned on a side of an electronic display screen of the wearable computing device;
applying, via the controller, a gain factor to the rotational input to determine a modified rotational input, the gain factor being proportional to an angular velocity of the rotational input; and
generating the digital output for the electronic display screen based on the modified rotational input.

12. The method of claim 11, wherein the gain factor causes a relationship between the rotational input and the digital output to be non-linear.

13. The method of claim 11 or 12, wherein the rotational input comprises a number of angular degrees moved by the rotary crown at a certain angular velocity.

14. The method of any one of claims 11 to 13, wherein increasing the angular velocity of the rotational input is configured to accelerate an amount of scroll on the electronic display screen in one-dimensional rotation and/or decreasing the angular velocity of the rotational input allows for a more fine-tuned scroll on the electronic display screen in one-dimensional rotation.

15. The method of any one of claims 11 to 14, wherein, when the rotational input of the rotary crown comprises a flick, the digital output corresponds to discrete incremental movements on the electronic display screen.
